# EUROPÄISCHE PATENTANMELDUNG

(11) **EP 2 671 441 A1**
(43) Veröffentlichungstag der Anmeldung: **11.12.2013**
(21) Anmeldenummer: 12171300.2
(22) Anmeldetag: 08.06.2012
(51) Int. Cl.: A01B 59/043, A01B 59/06

(54) **Anspannsystem zum Anspannen eines Arbeitsgeräts an eine Zugmaschine**

(71) Anmelder: GDS GmbH, 8200 Gleisdorf (AT)
(72) Erfinder: Gangl, Johann, 8162 Passail (AT)
(74) Vertreter: Pfenning, Meinig & Partner GbR

(57) **Zusammenfassung**

Die Erfindung betrifft ein Anspannsystem (1) zum Anspannen eines Arbeitsgeräts (4) an eine Zugmaschine, umfassend einen zugmaschinenseitigen ersten Rahmen (2) und einen geräteseitigen zweiten Rahmen (3), wobei der erste Rahmen (2) und der zweite Rahmen (3) eingerichtet sind, formschlüssig ineinanderzugreifen, und wobei der erste Rahmen (2) eine zu einem unteren Ende des ersten Rahmens (2) hin offene Aussparung (13) aufweist,
wobei der erste Rahmen (2) an einer der Aussparung (13) zugewandten Innenseite derart ausgebildet ist, dass ein austauschbares Innenmodul (19) zum Zentrieren und/oder Koppeln einer Gelenkwelle formschlüssig in der Aussparung (13) aufnehmbar ist.

## Beschreibung

Die Erfindung betrifft ein Anspannsystem zum Anspannen eines Arbeitsgeräts an eine Zugmaschine nach dem Oberbegriff des Hauptanspruchs.

Aus dem Stand der Technik bekannte Anspannsysteme zum Anspannen eines landwirtschaftlichen Arbeitsgeräts, beispielsweise eines Ackergeräts oder eines Anhängers, an eine landwirtschaftliche Zugmaschine, wie z. B. einen Traktor, umfassen ein zugmaschinenseitiges Rahmenteil, das beispielsweise an einer Dreipunkthydraulik eines Traktors montierbar ist, und ein komplementäres geräteseitiges Rahmenteil, das an dem Arbeitsgerät befestigbar ist. Das zugmaschinenseitige Rahmenteil und das geräteseitige Rahmenteil können miteinander in formschlüssigen Eingriff gebracht werden, wodurch das Arbeitsgerät an die Zugmaschine koppelbar ist. Vorteilhafterweise haben das zugmaschinenseitige und das geräteseitige Rahmenteil jeweils die Form eines umgekehrten Buchstabens "V", wobei die Rahmenteile in einem gekoppelten Zustand, in dem die Rahmenteile formschlüssig ineinandergreifen, entlang einer vertikalen Richtung orientiert sind, wobei das zugmaschinenseitige Rahmenteil das geräteseitige Rahmenteil trägt bzw. das geräteseitige Rahmenteil sich auf dem zugmaschinenseitigen Rahmenteil abstützt. Die vertikale Richtung ist dabei eine Richtung, entlang derer die Schwerkraft wirkt.

Bekannte Anspannsysteme verfügen zusätzlich über eine gewöhnlich am zugmaschinenseitigen Rahmenteil angeordnete Zentriervorrichtung zum Zentrieren und/oder Koppeln einer Gelenkwelle auf eine geräteseitige Welle. Die Gelenkwelle dient dabei der Drehmomentübertragung von einer zugmaschinenseitigen Zapfwelle auf die geräteseitige Welle. Bisher bekannte Anspannsysteme sind dabei jeweils nur für Zugmaschinen einer festgelegten Kategorie und/oder für spezielle Gelenkwellenverbindungen ausgelegt. Solche Systeme sind daher nur bedingt flexibel einsetzbar.

Der vorliegenden Erfindung liegt somit die Aufgabe zugrunde, ein Anspannsystem zu schaffen, das an unterschiedliche Zugmaschinen und/oder unterschiedlich ausgelegte Gelenkwellenverbindungen leicht anpassbar und/oder für diese in gleicher Weise geeignet ist.

Diese Aufgabe wird gelöst durch ein Anspannsystem gemäß Anspruch 1. Spezielle Ausgestaltungen sind in den Unteransprüchen beschrieben.

Vorgeschlagen wird also ein Anspannsystem zum Anspannen eines Arbeitsgeräts an eine Zugmaschine, umfassend einen zugmaschinenseitigen ersten Rahmen und einen geräteseitigen zweiten Rahmen, wobei der erste Rahmen und der zweite Rahmen eingerichtet sind, formschlüssig ineinanderzugreifen, und wobei der erste Rahmen eine zu einem unteren Ende des ersten Rahmens hin offene Aussparung aufweist. Der erste Rahmen ist an einer der Aussparung zugewandten Innenseite des ersten Rahmens derart ausgebildet, dass ein austauschbares Innenmodul zum Zentrieren und/oder Koppeln einer Gelenkwelle formschlüssig in der Aussparung aufnehmbar ist.

Dadurch, dass der erste Rahmen an der der Aussparung zugewandten Innenseite derart ausgebildet ist, dass das austauschbare Innenmodul, das zum Zentrieren und/oder zum Koppeln der Gelenkwelle dient, formschlüssig in der Aussparung aufnehmbar ist, ist es möglich, eine Vielzahl unterschiedlich ausgebildeter Innenmodule, die jeweils an eine spezielle Bauart der Zugmaschine und/oder der Gelenkwellenverbindung anpassbar sind, mit dem ersten Rahmen zu kombinieren. Das hier vorgeschlagene Anspannsystem ist somit besonders flexibel einsetzbar. Das Anspannsystem kann aber auch ohne das Innenmodul zum Einsatz kommen. In diesem Fall ist es z. B. möglich, beinahe beliebig relativ zum ersten Rahmen angeordnete Gelenkwellen durch den ersten Rahmen hinzuführen und an eine geräteseitige Welle anzukoppeln.

Zum formschlüssigen Aufnehmen eines solchen Innenmoduls in der Aussparung des ersten Rahmens kann der erste Rahmen an der Innenseite wenigstens eine Ausnehmung und/oder wenigstens eine Ausstülpung und/oder wenigstens eine Führungsschiene aufweisen. Zusätzlich oder alternativ kann der erste Rahmen an der Innenseite wenigstens ein Riegelelement aufweisen, mit dem ein entsprechendes Innenmodul in der Aussparung arretierbar ist, wobei das Riegelelement ein Rastelement und/oder ein mechanisch, elektrisch oder hydraulisch betätigbares Verbindungselement und/oder ein mechanisch, elektrisch oder hydraulisch betätigbares Schließelement umfassen kann. Beispielsweise kann das Riegelelement als Schraube, Bolzen, Hebel oder Spannelement ausgebildet sein, mit dem ein Innenmodul formschlüssig und/oder kraftschlüssig in der Aussparung arretiert werden kann, sobald das Innenmodul in die Aussparung eingeführt worden ist.

Eine spezielle Ausführungsform ist gekennzeichnet durch ein austauschbares Innenmodul, das formschlüssig in der Aussparung aufnehmbar, das in der Aussparung arretierbar, das aus der Aussparung lösbar und das aus der Aussparung entnehmbar ist, wobei das Innenmodul eine Zentriervorrichtung zum Zentrieren und/oder zum Koppeln einer Gelenkwelle und/oder einer Zapfwellenverbindung aufweist. Je nach spezieller Anforderung können verschiedene Innenmodule in den ersten Rahmen eingesetzt werden. Zum Beispiel können verschiedene Innenmodule jeweils unterschiedlich ausgestaltete Zentriervorrichtungen aufweisen, die für verschiedene Gelenkwellenverbindungen ausgelegt sind. Typischerweise ist derjenige Teil des Innenmoduls, der in den ersten Rahmen einsetzbar ist und mit dem ersten Rahmen in formschlüssigen Eingriff gebracht werden kann, bei unterschiedlichen Innenmodulen jeweils identisch oder im Wesentlichen identisch ausgestaltet. Üblicherweise weist dabei eine Außenseite des Innenmoduls, die in die Aussparung des ersten Rahmens einführbar ist und die mit dem ersten Rahmen in formschlüssigen Eingriff gebracht werden kann, wenigstens teilweise eine der Innenseite des ersten Rahmens komplementäre Form auf. Z. B. kann das Innenmoduls flächenartig ausgestaltet sein. Die Innenseite des ersten Rahmens kann dann z. B. wenigstens teilweise in Form eines Schlitzes ausgebildet sein, in den das Innenmodul einführbar ist. Eine Tiefe des Innenmoduls kann wenigstens 2 cm oder wenigstens 5 cm betragen. Eine Breite und/oder eine Höhe des Innenmoduls können wenigstens 10 cm, wenigstens 20 cm oder wenigstens 30 cm betragen. Ein Gewicht des Innenmoduls kann wenigstens 2%, wenigstens 5 %, wenigstens 10 % oder wenigstens 20 % eines Gewichts des ersten Rahmens betragen. Z. B. hat das Innenmodul ein Gewicht von wenigstens 0.5 kg, von wenigstens 1 kg, von wenigstens 2 kg oder von wenigstens 5 kg.

Wenn das Innenmodul in der Aussparung aufgenommen ist, ist es gewöhnlich wenigstens entlang fünf der sechs kartesischen Raumrichtungen (je zwei Richtungen pro Koordinatenachse) in formschlüssigem Eingriff mit dem ersten Rahmen, wobei ein mit dem ersten Rahmen starr verbundenes Koordinatensystem zugrunde gelegt sein soll.

Gewöhnlich ist das Innenmodul vom unteren Ende des ersten Rahmens her in die Aussparung des ersten Rahmens einführbar oder einschiebbar. Sobald das Innenmodul in der Aussparung aufgenommen ist, kann es in der Aussparung arretiert werden. In der gleichen Weise ist eine solcherart zwischen dem ersten Rahmen und dem Innenmodul hergestellte formschlüssige und/oder kraftschlüssige Arretierung wieder lösbar, so dass das Innenmodul problemlos aus der Aussparung entnehmbar ist und z. B. gegen ein anderes Innenmodul ausgetauscht werden kann.

Der erste Rahmen kann zwei vorzugsweise gleich lange Schenkel aufweisen, die in Form eines umgekehrten Buchstabens V angeordnet sind. Ein Winkel, den die beiden Schenkel miteinander einschließen, kann zwischen 60° und 80°, vorzugsweise zwischen 62° und 72° betragen. Besonders vorzugsweise beträgt der Winkel 66,6°. Die Schenkel sind dann an einem oberen Ende des ersten Rahmens, z. B. in einem Kopfteil zusammengeführt. Das untere Ende des ersten Rahmens ist dann z. B. durch die unteren Enden der Schenkel gegeben. Die Aussparung kann durch einen Bereich gegeben sein, der sich in einer durch die beiden Schenkel aufgespannten Rahmenebene des ersten Rahmens zwischen den Schenkeln erstreckt. Durch äußere Eckpunkte der V-förmig angeordneten Schenkel wird eine Dreiecksfläche aufgespannt, die sowohl die Aussparung als auch die Schenkel bzw. deren jeweilige Projektion in die Rahmenebene vollständig umfasst. Vorzugweise beträgt eine Fläche der Aussparung wenigstens 10 %, wenigstens 20 % oder wenigstens 30 % der genannten Dreiecksfläche. Dabei kann die Aussparung z. B. senkrecht zur Rahmenebene durchaus teilweise verdeckt sein. Dies ist z. B. dann der Fall, wenn die Innenseite des ersten Rahmens teilweise als Schlitz ausgebildet ist, in den das Innenmodul einsteckbar ist. Mit der Fläche der Aussparung sei jedoch die Fläche des gesamten zur Aufnahme des Innenmoduls eingerichteten, zwischen den Schenkeln sich erstreckenden Bereichs bezeichnet, im oben genannten Fall also insbesondere auch des teilweise abgedeckten Bereichs.

Eine weitere Ausführungsform zeichnet sich dadurch aus, dass die Zentriervorrichtung ein senkrecht zu einer durch das Innenmodul definierten Innenmodulebene verschiebbares Zentriermodul mit einer Zentrierausnehmung sowie eine Verschiebevorrichtung zum Verschieben des Zentriermoduls aufweist, wobei die Verschiebevorrichtung einen Hebel umfasst, der entlang einer Betätigungsrichtung betätigbar ist, wobei die Betätigungsrichtung parallel oder im Wesentlichen parallel zur Innenmodulebene ist. Wenn das Innenmodul im ersten Rahmen aufgenommen oder arretiert ist, sind die Innenmodulebene und die genannte Rahmenebene des ersten Rahmens gewöhnlich parallel oder fallen zusammen.

Die Zentrierausnehmung dient insbesondere zum Aufnehmen einer Gelenkwelle und/oder einer Zapfwellenverbindung und zum Zentrieren und/oder zum Ankoppeln der Gelenkwelle an eine geräteseitige Welle. Das Ankoppeln der Gelenkwelle an die geräteseitige Welle kann dabei durch Verschieben des Zentriermoduls relativ zum Innenmodul erfolgen. Im gekoppelten Zustand des ersten und des zweiten Rahmens, in dem der erste und der zweite Rahmen formschlüssig ineinandergreifen und in dem der erste Rahmen den zweiten Rahmen trägt, sind der erste und der zweite Rahmen gewöhnlich vertikal orientiert angeordnet, so dass die Gelenkwelle senkrecht oder im Wesentlichen senkrecht zur Rahmenebene durch den ersten und den zweiten Rahmen hindurchgreift. Im beschriebenen gekoppelten Zustand ist das Verschieben des Zentriermoduls senkrecht zur Innenmodulebene also gleichbedeutend mit einem Verschieben in einer horizontalen Richtung, also entlang einer Verbindungsachse zwischen der Zugmaschine und dem Arbeitsgerät.

Die Betätigungsrichtung bezeichnet eine Richtung, entlang derer eine zum Betätigen des Hebels aufgewendete Kraft am Hebel angreift. Gewöhnlich schließt die Betätigungsrichtung mit der Innenmodulebene einen Winkel ein, der kleiner ist als 30°, vorzugsweise kleiner als 20°. Die Zentriervorrichtung kann auf diese Weise besonders kompakt ausgebildet sein. Eine Drehachse des Hebels, bezüglich derer der Hebel drehbar gelagert ist, ist gewöhnlich ebenfalls parallel zur Innenmodulebene. Ist das Innenmodul im ersten Rahmen arretiert und sind die Rahmen im gekoppelten Zustand vertikal ausgerichtet, so ist die Drehachse des Hebels typischerweise in horizontaler Richtung orientiert. Die Betätigungsrichtung verläuft dann vorzugsweise in vertikaler oder im Wesentlichen in vertikaler Richtung.

Typischerweise haben der erste Rahmen und das Innenmodul jeweils eine symmetrische Form, weisen also jeweils eine Symmetrieachse auf. Ist das Innenmodul im ersten Rahmen aufgenommen bzw. arretiert, so fallen diese Symmetrieachsen zusammen oder sind parallel. Die zuvor benannte Betätigungsrichtung, entlang derer der Hebel der Zentriervorrichtung betätigbar ist, kann parallel oder im Wesentlichen parallel zur Symmetrieachse des Innenmoduls sein. Ist das Innenmodul im ersten Rahmen arretiert und sind die beiden Rahmen im gekoppelten Zustand vertikal ausgerichtet, so ist damit auch die Symmetrieachse des Innenmoduls vertikal ausgerichtet. Die Aussage, dass die Betätigungsrichtung parallel zur Symmetrieachse des Innenmoduls ist, ist dann gleichbedeutend damit, dass die Betätigungsrichtung vertikal ausgerichtet ist.

Der Hebel zum Verschieben des Zentriermoduls kann unmittelbar am Zentriermodul angreifen. Alternativ kann der Hebel auch an einem Element angreifen, das mit dem Zentriermodul verbunden ist. Vorzugsweise ist das Element starr mit dem Zentriermodul verbunden, Zum Beispiel können das Zentriermodul und die Verschiebevorrichtung jeweils auf unterschiedlichen Seiten der Innenmodulebene am Innenmodul angeordnet sein oder anordenbar sein. Auch dies trägt zur Kompaktheit der Anordnung bei. Bei einer speziellen Ausführungsform kann das Zentriermodul z. B. Bolzen aufweisen, mit denen das Zentriermodul in entsprechende Hülsen des Innenmoduls einsteckbar ist. Dabei können diese Bolzen innerhalb der Hülsen verschiebbar sein.

Es kann vorgesehen sein, dass die Verschiebevorrichtung ein hydraulisches und/oder elektrisches und/oder mechanisches Betätigungselement zum Betätigen des Hebels entlang der Betätigungsrichtung aufweist, wobei das Betätigungselement vorzugsweise am Innenmodul arretiert ist. Das Betätigungselement kann z. B. als hydraulisch oder elektrisch betriebener Hubzylinder ausgebildet sein. Das Betätigungselement kann am Innenmodul bezüglich einer Achse drehbar arretiert sein oder mit dem Innenmodul durch ein drehbares Gelenk verbunden sein. Bevorzugt ist diese Achse parallel zur Innenmodulebene.

Eine besonders raumsparende Ausführungsform der Verschiebevorrichtung zeichnet sich dadurch aus, dass ein erster und ein zweiter Hebelarm des Hebels relativ zueinander starr angeordnet sind und einen Winkel von wenigstens 30° einschließen. Bevorzugt beträgt der Winkel zwischen 60° und 120°, idealerweise etwa 90°. Zum Beispiel greift der erste der beiden Hebelarme am Zentriermodul oder am mit dem Zentriermodul verbundenen Element an, und der zweite Hebelarm wird durch das zuvor beschriebene Betätigungselement betätigt. Insbesondere die Ausführungsform, bei der die Betätigungsrichtung senkrecht oder im Wesentlichen senkrecht zur Verschieberichtung des Zentriermoduls ist, lässt sich durch einen solcherart angewinkelten Hebel in besonders vorteilhafter Weise realisieren.

Eine weitere Ausführungsform zeichnet sich dadurch aus, dass das Innenmodul zum Arretieren des Innenmoduls in der Aussparung wenigstens ein mechanisch und/oder elektrisch und/oder hydraulisch betätigbares weiteres Riegelelement aufweist, das vorzugsweise parallel zur Innenmodulebene bewegbar ist. Ist das Innenmodul in der Aussparung aufgenommen, so führt das weitere Riegelelement zum Arretieren des Innenmoduls in der Aussparung also typischerweise eine Translationsbewegung parallel zur Rahmenebene des ersten Rahmens aus.

Bei einer abgewandelten Variante dieser Ausführungsform kann das Riegelelement die genannte Translationsbewegung selbstverständlich auch senkrecht zur Innenmodulebene und/oder senkrecht zur Rahmenebene des ersten Rahmens durchführen. Bei dieser Ausführungsform handelt es sich bei dem Riegelelement des Innenmoduls vorzugsweise um ein in das Innenmodul eingelassenes und aus dem Innenmodul ausfahrbares Riegelelement, das z. B. als Bolzen oder Schraube ausgebildet sein kann. Zweckmäßigerweise weist der erste Rahmen dann an der Innenseite entsprechende Ausnehmungen zur Aufnahme dieses ausfahrbaren Riegelelements auf, so dass das Innenmodul durch Ausfahrens dieses Riegelelements im ersten Rahmen verriegelbar oder arretierbar ist, wenn das Innenmodul in der Aussparung aufgenommen ist. Natürlich können Innenmodul und erster Rahmen auch durch gewöhnliche Schraubenverbindungen verbunden werden.

Eine weitere Ausführungsform ist gekennzeichnet durch eine Verriegelungsvorrichtung zum Verriegeln des ersten Rahmens mit dem zweiten Rahmen, wobei die Verriegelungsvorrichtung einen am ersten Rahmen angeordneten Verriegelungshebel zum Eingreifen in den zweiten Rahmen oder in ein mit dem zweiten Rahmen starr verbundenes Element umfasst, wobei der Verriegelungshebel entlang einer weiteren Betätigungsrichtung betätigbar ist, die parallel oder im Wesentlichen parallel zur Rahmenebene des ersten Rahmens ist. Der Verriegelungshebel kann insbesondere ausgebildet sein, den zweiten Rahmen vom ersten Rahmen aus gesehen zu hintergreifen. Dazu kann der Verriegelungshebel z. B. als Haken ausgebildet sein.

Die Verriegelungsvorrichtung kann ferner ein weiteres Betätigungselement zum Betätigen des Verriegelungshebels entlang der weiteren Betätigungsrichtung aufweisen, wobei das weitere Betätigungselement hydraulisch und/oder elektrisch und/oder mechanisch betätigbar sein kann. Das weitere Betätigungselement kann am ersten Rahmen befestigt sein, z. B. auf einer der Zugmaschine zugewandten Seite des ersten Rahmens. Die weitere Betätigungsrichtung kann insbesondere parallel oder im Wesentlichen parallel zur Symmetrieachse des ersten Rahmens sein. Wie bereits erläutert wurde, ist dies im gekoppelten Zustand des ersten und des zweiten Rahmens gewöhnlich gleichbedeutend damit, dass die weitere Betätigungsrichtung entlang der vertikalen Richtung orientiert ist. Mithilfe der Verriegelungsvorrichtung kann im gekoppelten Zustand des ersten und des zweiten Rahmens ein weiterer Formschluss und/oder Kraftschluss zwischen dem ersten und dem zweiten Rahmen hergestellt werden. Gewöhnlich ist die Verriegelungsvorrichtung dabei derart ausgebildet, dass durch sie zwischen dem ersten Rahmen und dem zweiten Rahmen im gekoppelten Zustand ein Formschluss in der vertikalen Richtung hergestellt werden kann. Eine Drehachse des Verriegelungshebels, bezüglich derer der Verriegelungshebel drehbar gelagert ist, verläuft typischerweise parallel zur Rahmenebene des ersten Rahmens. Gewöhnlich ist die Verriegelungsvorrichtung an einem oberen Ende des ersten Rahmens angeordnet, z. B. an einem Kopfteil, an welchem die Schenkel des ersten Rahmens zusammenlaufen.

Selbstverständlich kann der Verriegelungshebel der Verriegelungsvorrichtung bei alternativen Ausführungsformen auch am geräteseitigen zweiten Rahmen angeordnet und zum Eingreifen in den ersten Rahmen ausgebildet sein. In diesem Fall ist die weitere Betätigungsrichtung dann vorzugsweise parallel oder im Wesentlichen parallel zu einer Rahmenebene des zweiten Rahmens.

Das Anspannsystem kann ferner ein am ersten Rahmen oder am zweiten Rahmen angeordnetes und vorzugsweise elektrisch steuerbares Hydraulikventil zum Steuern des Betätigungselements und/oder zum Steuern des weiteren Betätigungselements umfassen. Die hydraulische Steuerung der Betätigungselemente kann damit unabhängig von einem zugmaschinenseitigen oder von einem geräteseitigen Hydrauliksystem ausgebildet sein.

Ausführungsbeispiele der Erfindung sind in den Zeichnungen dargestellt und werden anhand der nachfolgenden Beschreibung näher erläutert. Es zeigen:
- Fig. 1: ein Anspannsystem 1 mit einem zugmaschinenseitigen ersten Rahmen und einem geräteseitigen zweiten Rahmen in einem entkoppelten Zustand,
- Fig. 2: eine Aufsicht des ersten Rahmens,
- Fig. 3: das Anspannsystem aus Fig. 1 in einem gekoppelten Zustand, in dem der erste und der zweite Rahmen formschlüssig ineinandergreifen,
- Fig. 4: eine perspektivische Ansicht des ersten Rahmens, eines im ersten Rahmen formschlüssig aufnehmbaren Innenmoduls, eines in das Innenmodul einsteckbaren Zentriermoduls, einer Verschiebevorrichtung zum Verschieben des Zentriermoduls, sowie einer am ersten Rahmen angeordneten Verriegelungsvorrichtung zum Verriegeln des ersten Rahmens mit dem zweiten Rahmen,
- Fig. 5: den ersten Rahmen und das Innenmodul aus Fig. 4, wobei das Innenmodul formschlüssig im ersten Rahmen aufgenommen ist und das Zentriermodul in das Innenmodul eingesteckt ist,
- Fig. 6: das Innenmodul aus Fig. 4 in einer Aufsicht,
- Fig. 7: einen Schnitt durch den ersten Rahmen und das im ersten Rahmen arretierte Innenmodul, wobei das Zentriermodul und die Verschiebevorrichtung auf unterschiedlichen Seiten des Innenmoduls angeordnet sind,
- Fig. 8: eine Aufsicht auf den ersten Rahmen, das im ersten Rahmen arretierte Innenmodul sowie die Verschiebevorrichtung, im gekoppelten Zustand des ersten und des zweiten Rahmens von einer der Zugmaschine zugewandten Seite betrachtet, und
- Fig. 9: eine Seitenansicht des ersten Rahmens und der Verriegelungsvorrichtung.

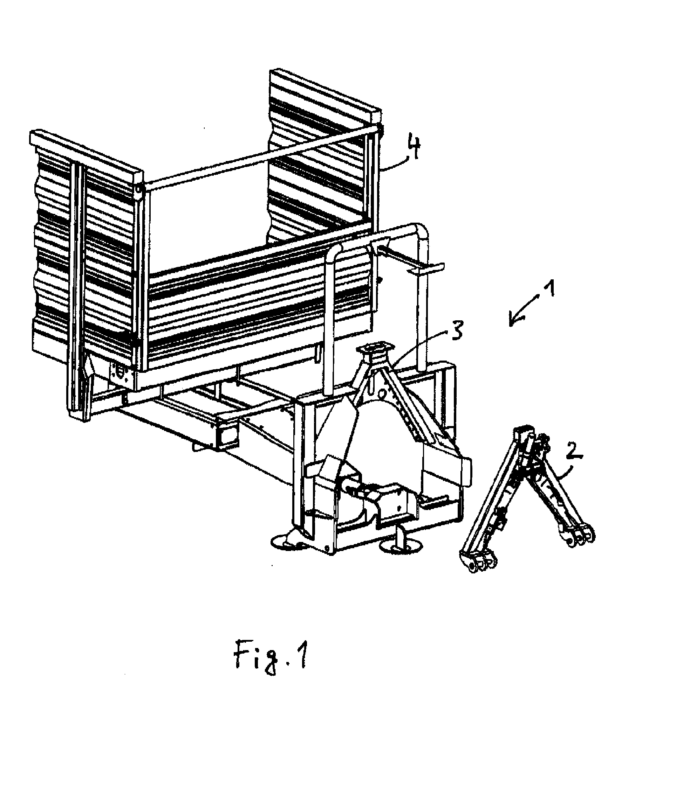

Figur 1 zeigt ein Anspannsystem 1 mit einem zugmaschinenseitigen ersten Rahmen 2 und mit einem geräteseitigen zweiten Rahmen 3. Der erste Rahmen 2 ist an einem hier nicht dargestellten Dreipunkt einer Zugmaschine, z. B. eines Traktors montiert. Der zweite Rahmen 3 ist mit einem landwirtschaftlichen Arbeitsgerät 4 verbunden, das hier als Anhänger ausgebildet ist. Der erste Rahmen 2 und der zweite Rahmen 3 können zum Koppeln des Arbeitsgeräts 4 an die Zugmaschine formschlüssig in Eingriff gebracht werden. In Fig. 1 sind der erste Rahmen 2 und der zweite Rahmen 3 jedoch räumlich getrennt, also in einem entkoppelten Zustand.

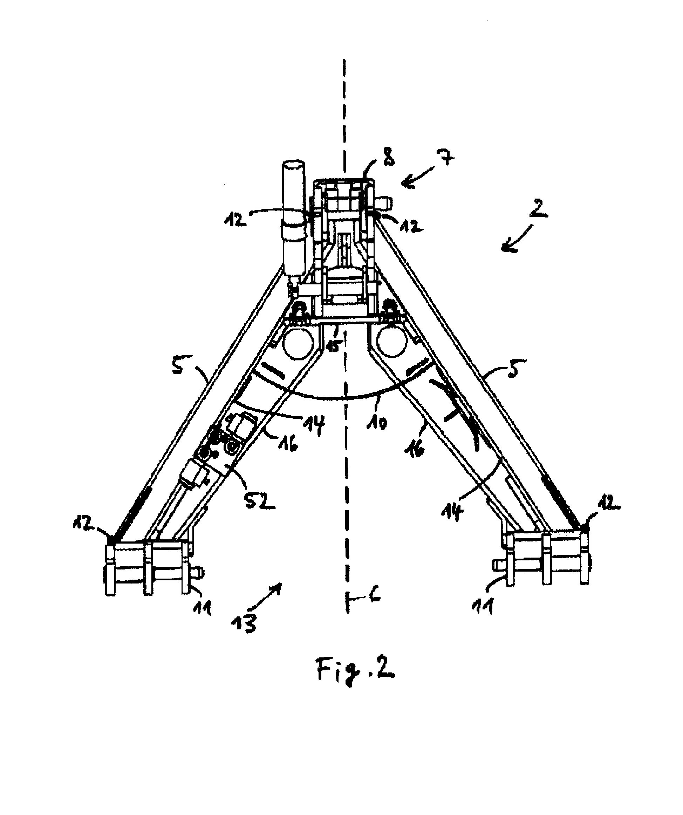

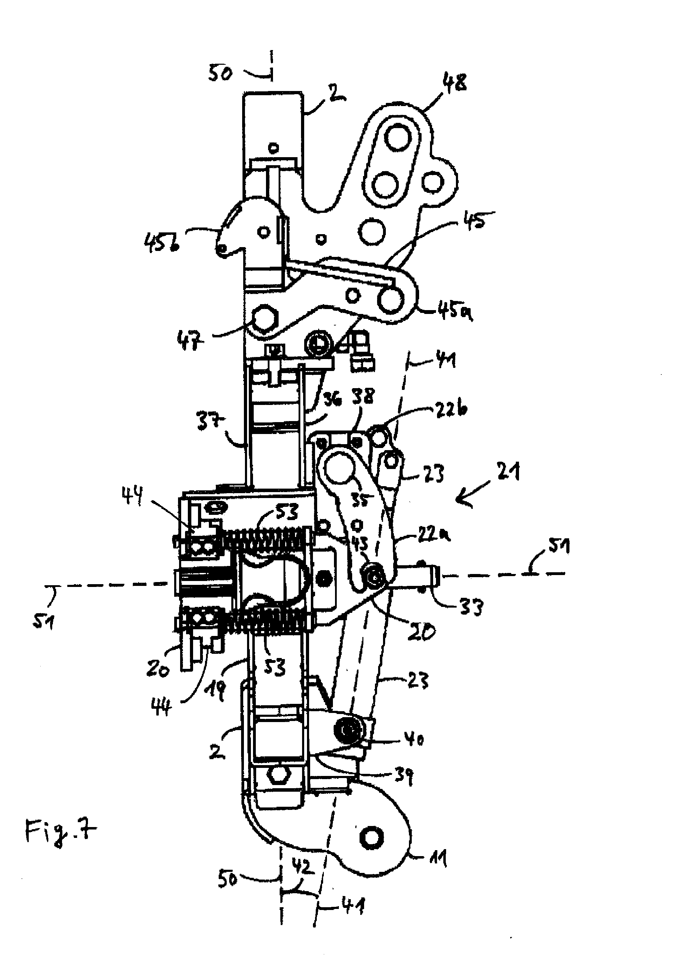

Der erste Rahmen 2 ist in Figur 2 in einer Aufsicht von einer zugmaschinenseitigen Seite des Rahmens 2 dargestellt. Hier und im Folgenden sind wiederkehrende Merkmale jeweils mit identischen Bezugszeichen versehen. Der Rahmen 2 hat die Form eines umgekehrten Buchstabens "V" und umfasst zwei gleich lange Schenkel 5, die bezüglich einer Symmetrieachse 6 des ersten Rahmens 2 symmetrisch angeordnet sind und an einem oberen Ende 7 des ersten Rahmens 2 an einem Kopfteil 8 zusammenlaufen. Die Schenkel 5 spannen eine Rahmenebene 50 (siehe Fig. 7) des ersten Rahmens auf, die in Fig. 2 zur Zeichenebene parallel ist. Im hier gezeigten Ausführungsbeispiel haben die Schenkel 5 jeweils eine Länge von 748 mm. Ein von den Schenkeln 5 eingeschlossener Winkel 10 beträgt 66,6°. An unteren Enden der Schenkel 5 weisen diese jeweils Anlenkbleche 11 auf, die zur Aufnahme eines Unterlenkers des hydraulischen Dreipunktes der Zugmaschine ausgebildet sind. Äußere Eckpunkte 12 des ersten Rahmens 2 spannen eine Ebene bzw. eine Fläche auf, die in etwa die Form eines Dreiecks hat und die die Schenkel 5 bzw. deren Projektion in die Rahmenebene 50 vollständig umfasst.

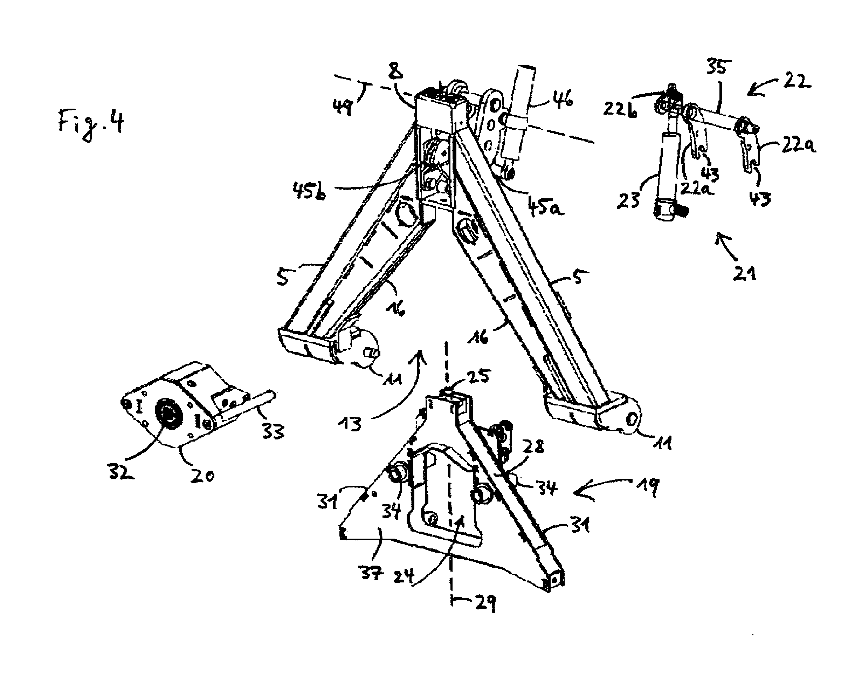

Zwischen den Schenkeln 5 erstreckt sich eine Aussparung 13 des ersten Rahmens 2, die nach unten offen ist. Die Aussparung 13 wird von der zuvor beschriebenen Dreiecksfläche vollständig umfasst. Die Aussparung 13 wird seitlich von Innenseiten 14 der Schenkel 5 und nach oben hin von einer Innenseite 15 des Kopfteils 8 begrenzt. Eine Fläche der Aussparung 13 bzw. von deren Projektion in die Rahmenebene 50 beträgt in etwa 60 % der zuvor genannten Dreiecksfläche, wobei die Dreiecksfläche auch die Aussparung 13 vollständig umfasst. An den Innenseiten 14 der Schenkel 5 sind Aufnahmeelemente 16 angeordnet, die eingerichtet sind, ein an späterer Stelle beschriebenes Innenmodul 19 (siehe Fig. 4) formschlüssig in der Aussparung 13 aufzunehmen. In Fig. 2 nicht erkennbar ist, dass die Aufnahmeelemente 16 senkrecht zur Zeichenebene der Fig. 2 zur formschlüssigen Aufnahme des genannten Innenmoduls jeweils eine schlitzartige oder spaltartige Ausnehmung bilden. Die Aussparung 13 verläuft auch innerhalb dieser Ausnehmungen und wird in der in Fig. 2 gezeigten Aufsicht daher teilweise durch die Aufnahmeelemente 16 verdeckt.

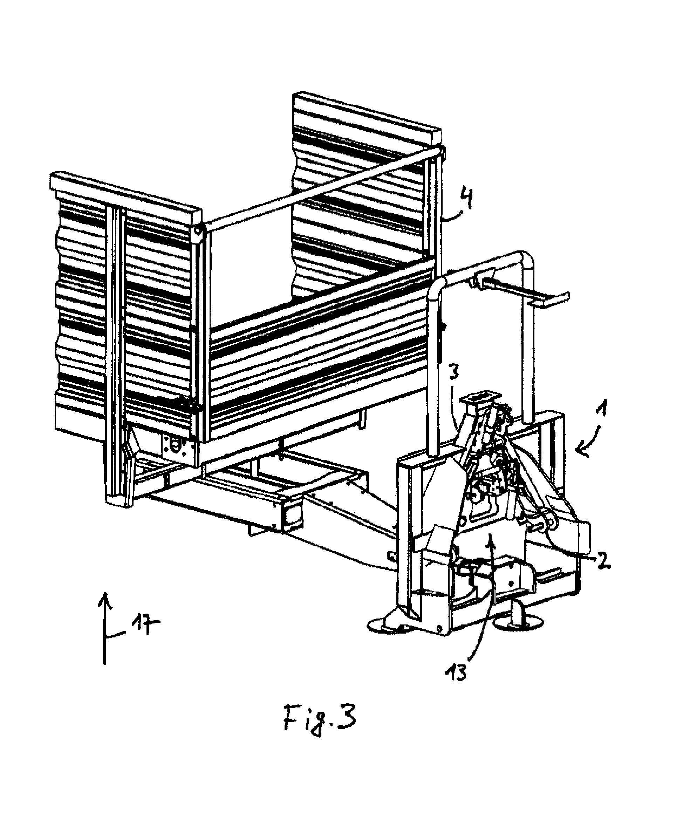

Figur 3 zeigt den ersten Rahmen 2 und den zweiten Rahmen 3 in einem gekoppelten Zustand, in dem die Rahmen formschlüssig ineinandergreifen. Im gekoppelten Zustand sind die Rahmen 2 und 3 jeweils entlang einer vertikalen Richtung 17 ausgerichtet. Damit ist die Symmetrieachse 6 des ersten Rahmens 2 im gekoppelten Zustand parallel zur vertikalen Richtung 17 ausgerichtet, entlang derer die Schwerkraft wirkt. Auch der zweite Rahmen 3 umfasst einen Abschnitt 18, der die Form eines umgekehrten Buchstabens "V" hat und in den der erste Rahmen 2 einführbar ist. Zum Koppeln der Rahmen 2 und 3 wird der am Unterlenker der Zugmaschine montierte erste Rahmen 2 abgesenkt und entlang der vertikalen Richtung 17 ausgerichtet. Sodann fährt die Zugmaschine das Arbeitsgerät 4 an und hebt den Unterlenker an, so dass der erste Rahmen 2 von unten in den zweiten Rahmen 3 eingeführt wird und den zweiten Rahmen 3 hochhebt. Im damit hergestellten gekoppelten Zustand der Rahmen 2 und 3, der in Fig. 3 dargestellt ist, trägt der erste Rahmen 2 den zweiten Rahmen 3 und der zweite Rahmen 3 stützt sich auf dem ersten Rahmen 2 ab. Im gekoppelten Zustand kann z. B. eine hier nicht gezeigte Gelenkwellenverbindung, mit der ein Drehmoment von einer Zapfwelle der Zugmaschine auf eine Welle des Arbeitsgeräts 4 übertragbar ist, durch die Aussparung 13 und eine entsprechende Aussparung des zweiten Rahmens 3 hindurchgeführt werden. Dadurch, dass die Aussparung 13 sich beinahe über den gesamten von den Schenkeln 5 eingerahmten Bereich erstreckt, ist das hier gezeigte Anspannsystem 1 mit einer Vielzahl von Gelenkwellenverbindungen zwischen Zugmaschine und Arbeitsgerät 4 kompatibel, insbesondere auch mit solchen Gelenkwellenverbindungen, bei denen die Gelenkwelle dezentral, d. h. gegenüber der Symmetrieachse 6 des ersten Rahmens 2 seitlich verschoben durch die Aussparung 13 hindurchgreift. Das Anspannsystem 1 ist damit besonders flexibel einsetzbar und nicht auf einen speziellen Typ von Gelenkwellenverbindungen festgelegt.

Figur 4 zeigt den ersten Rahmen 2 mit einem in die Aussparung 13 einsetzbaren und austauschbaren Innenmodul 19, das dem Zentrieren und/oder dem Koppeln einer Gelenkwelle dient. Dazu weist das Innenmodul 19 eine Zentriervorrichtung auf, die ein Zentriermodul 20 und eine Verschiebevorrichtung 21 zum Verschieben des Zentriermoduls 20 aufweist, wobei die Verschiebevorrichtung 21 einen Hebel 22 und einen Kurzhubzylinder 23 zum Betätigen des Hebels 22 umfasst. Der Übersichtlichkeit halber sind das Innenmodul 19 sowie die genannten Komponenten der Zentriervorrichtung in Fig. 4 getrennt dargestellt. Das Innenmodul 19 hat eine im Wesentlichen flächenartige Dreiecksform und ist eingerichtet, mittels der Aufnahmeelemente 16 formschlüssig in der Aussparung 13 des ersten Rahmens 2 aufgenommen zu werden.

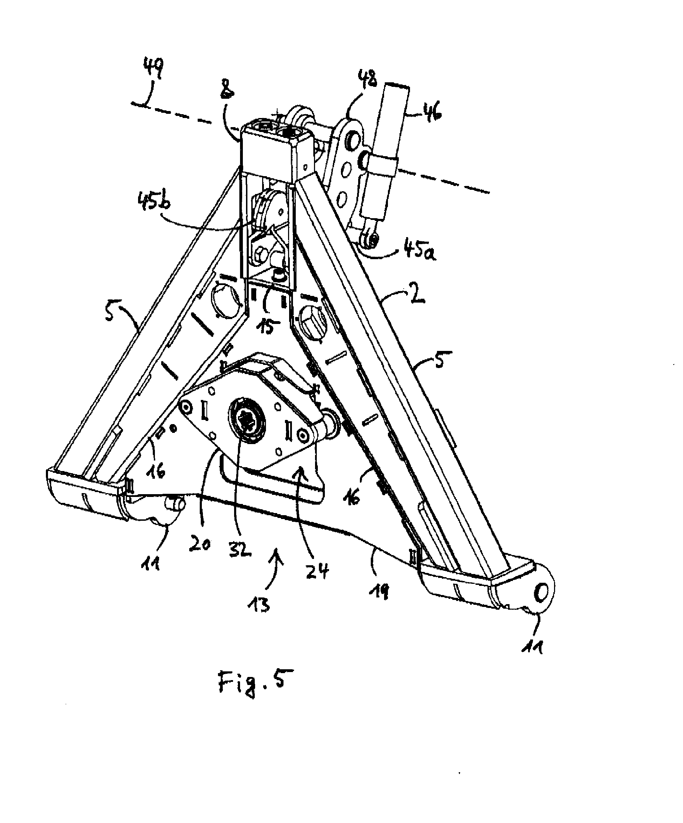

Figur 5 zeigt das Innenmodul 19 in einer solchen in der Aussparung 13 aufgenommenen Position. Das Innenmodul 19 weist eine zentrale Ausnehmung 24 auf, durch welche eine Gelenkwelle hindurchgeführt werden kann. Das Innenmodul 19 kann von unten in die Aussparung 13 hineingeschoben und in der umgekehrten Richtung in einfacher Weise wieder aus der Aussparung 13 herausgenommen werden. Wenn das Innenmodul 19 in der Aussparung 13 aufgenommen ist, wie in Fig. 5 dargestellt, kann das Innenmodul 19 durch Riegelelemente in dem ersten Rahmen 2 arretiert werden, wobei die Riegelelemente am ersten Rahmen 2 und/oder am Innenmodul 19 angeordnet sein können. Ein solches Riegelelement ist beispielsweise die in Fig. 4 gezeigte Schraube 25, mit der das Innenmodul 19 kraftschlüssig mit dem ersten Rahmen 2 verbindbar ist. Eine Verbindungsrichtung der durch die Schraube 25 vermittelten Verbindung ist parallel zu der durch die Schenkel 5 aufgespannten Rahmenebene 50 des ersten Rahmens 2 und parallel zu einer durch das flächenartige Innenmodul 19 definierten Innenmodulebene, wobei die Rahmenebene 50 und die Innenmodulebene zusammenfallen bzw. parallel ausgerichtet sind, wenn das Innenmodul 19 wie in Fig. 5 gezeigt in der Aussparung 13 aufgenommen ist.

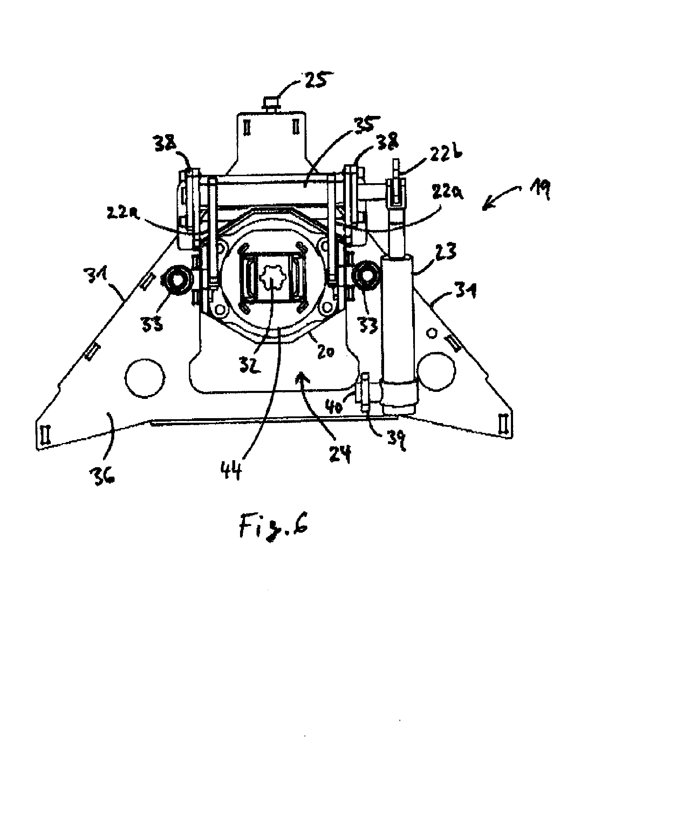

Figur 6 zeigt eine Aufsicht auf das Innenmodul 19 von einer im gekoppelten Zustand der Zugmaschine zugewandten ersten Seite 36 des Innenmoduls 19. Das Zentriermodul 20 ist mit den Bolzen 33 von einer im gekoppelten Zustand dem Gerät 4 zugewandten zweiten Seite 37 (siehe Fig. 7) des Innenmoduls 19 in das Innenmodul 19 eingesteckt. In Fig. 6 nicht explizit gezeigt sind Bolzen, die parallel zur Innenmodulebene oder in der Innenmodulebene im Innenmodul 19 versenkbar und aus dem Innenmodul 19 ausfahrbar sind. Solche Bolzen können beispielsweise elektrisch oder hydraulisch betätigbar sein. Der erste Rahmen 2 weist dann zweckmäßigerweise entsprechende Hülsen zum Aufnehmen der ausfahrbaren Bolzen auf. Befindet sich das Innenmodul 19 in der in Fig. 5 gezeigten im ersten Rahmen 2 aufgenommenen Position und ist mittels der Schraube 25 und/oder mittels der genannten Bolzen im ersten Rahmen 2 bzw. in der Aussparung 13 arretiert, so greifen das Innenmodul 19 und der erste Rahmen 2 in allen Richtungen formschlüssig und/oder kraftschlüssig ineinander. Bei alternativen, hier nicht explizit dargestellten Ausführungsformen kann eine Verbindung zwischen dem Innenmodul 19 und dem ersten Rahmen 2 selbstverständlich auch senkrecht zur Rahmenebene 50 bzw. zur Innenmodulebene ausgerichtet sein. Das Innenmodul 19 ist also in einfacher Weise austauschbar. Unterschiedliche Innenmodule können beispielsweise jeweils für verschiedene Gelenkwellenverbindungen ausgelegt sein. Auf diese Weise kann derselbe erste Rahmen 2 durch einfaches Austauschen des Innenmoduls zum Zentrieren und/oder Koppeln unterschiedlicher Gelenkwellenverbindungen verwendet werden. In Fig. 6 gezeigte Merkmale, die hier nicht beschrieben sind, werden an späterer Stelle näher erläutert.

Zum Herstellen eines möglichst vollständigen Formschlusses zwischen dem Innenmodul 19 und dem ersten Rahmen 2 weist eine Außenseite 28 des Innenmoduls 19 eine zur Innenseite des ersten Rahmens 2 möglichst vollständig komplementäre Form auf. So hat in Fig. 4 auch das Innenmodul eine in etwa dreieckige Form und ist symmetrisch bezüglich einer Symmetrieachse 29 des Innenmoduls 19. Außenflanken 31 des in etwa dreieckigen Innenmoduls 19 schließen bei dem hier gezeigten Ausführungsbeispiel einen Winkel von 78,89° ein.

Das in den Figuren 4 und 5 gezeigte Zentriermodul 20 weist zum Aufnehmen einer Gelenkwelle eine zentrale Zentrierausnehmung 32 auf. Zusätzlich sind an dem Zentriermodul 20 seitlich zwei Bolzen 33 angeordnet, von denen in Fig. 4 und Fig. 5 jeweils einer verdeckt ist. Die Bolzen 33 sind in entsprechende Hülsen 34 des Innenmoduls 19 einführbar oder einsteckbar, wobei die Hülsen 34 senkrecht zur Innenmodulebene orientiert sind. Ist das Zentriermodul 20 solcherart in das Innenmodul 19 eingesteckt, so kann es relativ zum Innenmodul 19 und senkrecht zur Innenmodulebene bewegt bzw. verschoben werden. Dies kann zum Ankoppeln einer in der Zentrierausnehmung 32 aufgenommenen Gelenkwelle an eine geräteseitige Welle genutzt werden. Ist das Innenmodul 19 im ersten Rahmen 2 aufgenommen bzw. arretiert und das Zentriermodul 20 auf das Innenmodul 19 aufgesteckt, so fluchten die Zentrierausnehmung 32, die zentrale Ausnehmung 24 und die Aussparung 13. Es ist hervorzuheben, dass auch das Zentriermodul 20 leicht austauschbar ist. So können beispielsweise auf dasselbe Innenmodul 19 jeweils Zentriermodule mit Zentrierausnehmungen unterschiedlichen Durchmessers für jeweils unterschiedliche Gelenkwellen aufgesteckt werden. Auch dies trägt in vorteilhafter Weise zur Flexibilität des hier beschriebenen Anspannsystems bei.

Vorzugsweise ist das Zentriermodul 20 an einer dem Arbeitsgerät 4 zugewandten zweiten Seite 37 des Innenmoduls 19 angeordnet bzw. an dieser Seite in das Innenmodul 19 einsteckbar, wie in Fig. 5 gezeigt. Bei dem hier beschriebenen Ausführungsbeispiel ist die Verschiebevorrichtung 21 mit dem Hebel 22 und dem Kurzhubzylinder 23 dagegen auf einer der Zugmaschine zugewandten ersten Seite 36 des Innenmoduls 19 montiert. Hier und im Folgenden seien die Formulierungen "dem Arbeitsgerät zugewandt" bzw. "der Zugmaschine zugewandt" dabei auf eine Anordnung bezogen, bei der die Rahmen 2 und 3 wie in Fig. 3 dargestellt orientiert sind und vorzugsweise miteinander gekoppelt sind. In Bezug auf das Innenmodul 19 soll diese Formulierung sich zusätzlich auf eine Anordnung beziehen, bei der das Innenmodul 19 im ersten Rahmen 2 aufgenommen bzw. arretiert ist. Fig. 4 ist entnehmbar, dass der Hebel 22 zwei Verschiebearme 22a zum Verschieben des Zentriermoduls 20 und einen Betätigungsarm 22b aufweist. Die Verschiebearme 22a und der Betätigungsarm 22b sind jeweils starr an einer Hebelachse 35 angeordnet und über diese miteinander verbunden. Fig. 4 zeigt auch, dass die Verschiebearme 22a mit dem Betätigungsarm 22b einen Winkel einschließen, der in etwa 90° beträgt.

Anordnung und Funktionsweise der Verschiebevorrichtung 21 werden im Folgenden anhand der Figur 7 erläutert, die einen Schnitt durch den ersten Rahmen 2 und das im ersten Rahmen 2 arretierte Innenmodul 19 zeigt, wobei die mit der Zeichenebene zusammenfallende Schnittebene senkrecht zur Rahmenebene 50 des ersten Rahmens 2 und zur Innenmodulebene des Innenmoduls 19 orientiert ist. In Fig. 7 angegebene Maße sind jeweils in Millimetern angegeben. Fig. 7 zeigt deutlich die Anordnung der Verschiebevorrichtung an der der Zugmaschine zugewandten ersten Seite 36 des Innenmoduls 19. Das Zentriermodul 20 ist von der dem Arbeitsgerät zugewandten zweiten Seite 37 des Innenmoduls 19 in das Innenmodul 19 eingesteckt, wobei die Bolzen 33 des Zentriermoduls 20 an der ersten Seite 36 aus dem Innenmodul 19 herausragen. In Fig. 7 ist die Hebelachse 35 senkrecht zur Zeichenebene und damit parallel zur Innenmodulebene ausgerichtet. Die Hebelachse 35 ist in einer Halterung 38 drehbar gelagert, wobei die Halterung 38 fest auf der ersten Seite 36 des Innenmoduls 19 montiert ist. Ebenfalls zu sehen sind der Betätigungsarm 22b sowie einer der Verschiebearme 22a. Der Kurzhubzylinder 23 ist in einer weiteren Halterung 39 drehbar gelagert. Die weitere Halterung 39 ist an einem unteren Ende der ersten Seite 36 des Innenmoduls 19 fest montiert. Eine Lagerachse 40 der weiteren Halterung 39, bezüglich derer der Kurzhubzylinder 23 drehbar gelagert ist, ist parallel zur Hebelachse 35 und parallel zur Innenmodulebene ausgerichtet. Der Kurzhubzylinder 23 greift am Betätigungsarm 22b des Hebels an und ist eingerichtet, den Hebel 22 entlang einer Betätigungsrichtung 41 zu betätigen, die durch eine Längsachse des Kurzhubzylinders 23 gegeben und in Fig. 7 durch eine gestrichelte Linie angedeutet ist. In Fig. 7 schließt die Betätigungsrichtung 41 mit der Innenmodulebene bzw. mit der Rahmenebene 50 des ersten Rahmens einen Winkel 42 von etwa 25° ein. Beim Betätigen des Hebels 22 durch den Kurzhubzylinder 23 verändert sich der Winkel 42 zwischen Betätigungsrichtung 41 und Rahmenebene 50 bzw. Innenmodulebene geringfügig. Die parallele oder im Wesentlichen parallele Anordnung des Kurzhubzylinders 23 relativ zur Innenmodulebene führt zusammen mit der gewinkelten Ausgestaltung des Hebels 22 zu einer insgesamt besonders raumsparenden Anordnung der Verschiebevorrichtung 21 an der ersten Seite 36 des Innenmoduls 19.

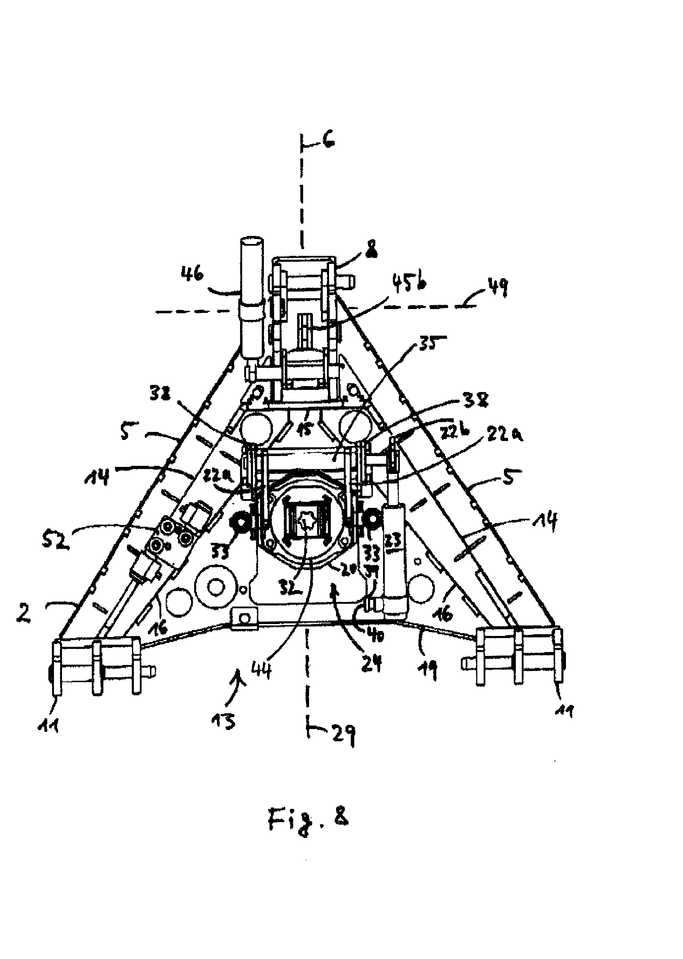

**Figur 8** zeigt eine Aufsicht auf eine der Zugmaschine zugewandte Seite des ersten Rahmens 2 und des im ersten Rahmen 2 arretierten Innenmoduls 19. Zusammen ist den Fign. 7 und 8 entnehmbar, dass die Betätigungsrichtung 41 mit der parallel zur Innenmodulebene verlaufenden Symmetrieachse 29 des Innenmoduls 19 ebenfalls den Winkel 42 von etwa 25° einschließt. In Fig. 8 fallen die Symmetrieachse 29 des Innenmoduls 19 und die Symmetrieachse 6 des ersten Rahmens 2 zusammen. Die Betätigungsrichtung 41 bzw. der Kurzhubzylinder 23 sind also parallel bzw. im Wesentlichen parallel zur Symmetrieachse 29 des Innenmoduls ausgerichtet, wobei eine Abweichung von einer vollständigen Parallelität durch den Winkel 42 (siehe Fig. 7) gegeben ist. Sind der erste Rahmen 2 und das Innenmodul 19 im gekoppelten Zustand des Anspannsystems 1 wie in Fig. 3 gezeigt entlang der vertikalen Richtung 17 ausgerichtet, so ist diese Aussage gleichbedeutend damit, dass die Betätigungsrichtung 41 bzw. der Kurzhubzylinder 23 nahezu parallel zur vertikalen Richtung 17 sind. Die Schenkel 5 des ersten Rahmens 2 können in unterschiedlicher Länge ausgeführt sein. Der Rahmen 2 bzw. das Anspannsystem 1 können damit mit Traktoren unterschiedlicher Kategorie (insbesondere Kategorien 1 bis 4) kombiniert werden.

Fig. 7 ist entnehmbar, dass am Zentriermodul 20 ein Lagergehäuse 44 angeordnet ist, wobei das Lagergehäuse 44 durch die zentrale Ausnehmung 24 des Innenmoduls hindurchgreift, wenn das Zentriermodul 20 wie in Fig. 7 gezeigt mittels der Bolzen 33 in das Innenmodul 19 eingesteckt ist. Das Zentriermodul 20 kann auch als Zentriergehäuse bezeichnet werden. In Fig. 7 ist die Ausnehmung 24 vom Zentriermodul 20 ausgefüllt. Die Verschiebearme 22a des Hebels 22 weisen an ihren Enden Ausnehmungen 43 auf (siehe auch Fig. 4), mit denen die Verschiebearme 22a das Zentriermodul 20 aufnehmen können. Beim Betätigen des Kurzhubzylinders 23 kann das Zentriermodul 20 also mittels der in das Zentriermodul 20 eingreifenden Verschiebearme 22a des Hebels 22 relativ zum Innenmodul 19 und senkrecht zur Innenmodulebene bzw. senkrecht zur Rahmenebene 50 des ersten Rahmens 2 verschoben werden. In Fig. 7 ist diese Verschieberichtung 51 durch eine gestrichelte Linie angedeutet. Fig. 7 zeigt auch, dass das Lagergehäuse 44 mittels vier Federn 53 elastisch an das Zentriermodul 20 gekoppelt ist. Ein Kuppelvorgang, bei dem eine im Zentriermodul 20 aufgenommene Gelenkwelle auf eine geräteseitige Welle zentriert oder an diese angekoppelt wird, kann damit besonders schonend vorgenommen werden.

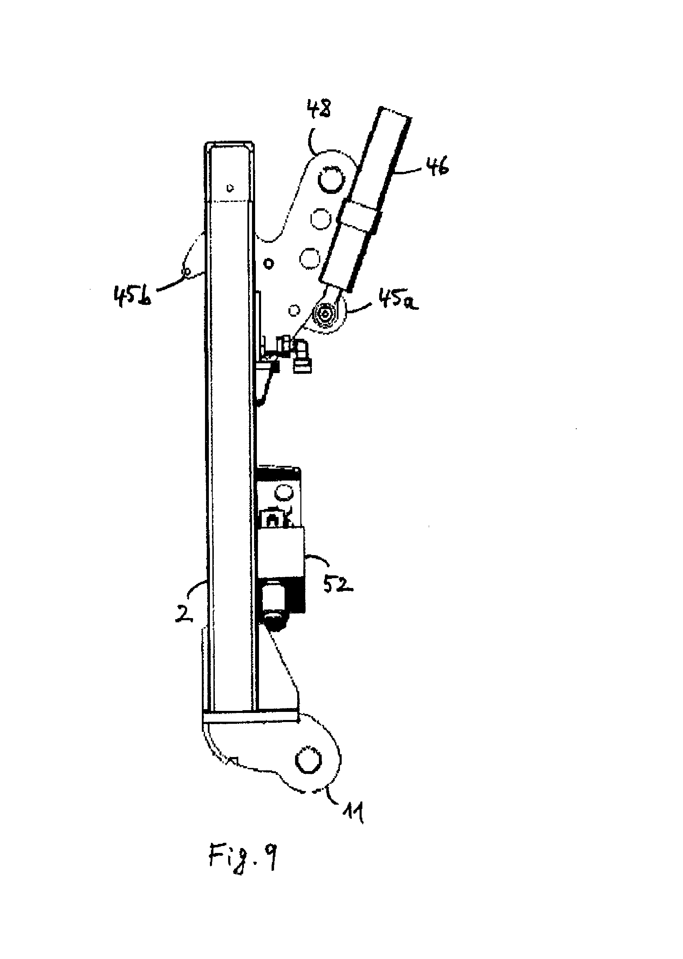

**Figur 9** zeigt den ersten Rahmen 2 in einer Seitenansicht. In den Figuren 5, 7 und 9 ist besonders deutlich eine Verriegelungsvorrichtung zum Verriegeln des ersten Rahmens 2 mit dem zweiten Rahmen 3 gezeigt, wobei die Verriegelungsvorrichtung einen Verriegelungshebel 45 und einen hydraulischen Zylinder 46 zum Betätigen des Verriegelungshebels 45 umfasst. Der Übersichtlichkeit halber ist der hydraulische Zylinder 46 in Fig. 7 nicht gezeigt. Alternativ kann anstatt des hydraulischen Zylinders 46 auch eine Stange verwendet werden, die manuell oder durch einen elektrischen oder hydraulischen Antrieb betätigbar ist. Fig. 7 ist besonders deutlich entnehmbar, dass der Verriegelungshebel 45 einen Betätigungsarm 45a, an dem der hydraulische Zylinder 46 angreift (siehe Fig. 9), sowie einen Riegelarm 45b aufweist.

Ähnlich wie beim zuvor beschriebenen Hebel 22 der Verschiebevorrichtung 21 schließen der Betätigungsarm 45a und der Riegelarm 45b einen Winkel von etwa 90° ein, sind starr miteinander verbunden und bezüglich einer Hebelachse 47 drehbar gelagert. In Fig. 7 ist die Hebelachse 47 senkrecht zur Zeichenebene ausgerichtet. Die Hebelachse 47 ist am Kopfteil des ersten Rahmens 2 angeordnet und ist parallel zur Rahmenebene 50 des ersten Rahmens 2. Gleichzeitig ist die Hebelachse 47 senkrecht zur Symmetrieachse 6 des ersten Rahmens 2 ausgerichtet. Den Figuren 5 und 9 ist entnehmbar, dass der hydraulische Zylinder 46 an einem Anlenkblech 48 des ersten Rahmens 2 montiert ist, wobei das Anlenkblech 48 z. B. mit einem Oberlenker des Dreipunkts der Zugmaschine verbindbar ist. Der hydraulische Zylinder 46 ist damit an einer der Zugmaschine zugewandten Seite des ersten Rahmens 2 am ersten Rahmen 2 montiert. In den Fign. 4 und 5 ist ferner zu erkennen, dass der Hydraulikzylinder 46 bezüglich einer Lagerachse 49 drehbar am Anlenkblech 48 gelagert ist. Die Lagerachse 49 ist parallel zur Hebelachse 47 des Verriegelungshebels 45 ausgerichtet. Damit ist auch die Lagerachse 49 parallel zur Rahmenebene 50 des ersten Rahmens und senkrecht zur Symmetrieachse 6 des ersten Rahmens 2. Wie beim Kurzhubzylinder 23, so schließt auch der hydraulische Zylinder 46 mit der Rahmenebene 50 einen Winkel von weniger als 30° ein. Eine Betätigungsrichtung des hydraulischen Zylinders 46, entlang derer dieser den Betätigungsarm 45a des Verriegelungshebels 45 betätigt, ist also parallel oder im Wesentlichen parallel zur Rahmenebene 50 des ersten Rahmens 2, wodurch die Anordnung des hydraulischen Zylinders 46 an der der Zugmaschine zugewandten Seite des ersten Rahmens 2 besonders raumsparend ist. Die Betätigungsrichtung des hydraulischen Zylinders 46 ist durch dessen Längsachse gegeben. Der hydraulische Zylinder 46 ist ebenso nahezu parallel zur Symmetrieachse 6 des ersten Rahmens 2 ausgerichtet. Eine Abweichung der Betätigungsrichtung des hydraulischen Zylinders 46 von der Symmetrieachse 6 des ersten Rahmens 2 beträgt bei dem hier gezeigten Ausführungsbeispiel weniger als 20°.

Der Riegelarm 45b des Verriegelungshebels 45 ist in Form eines Hakens ausgebildet, mit dem der Verriegelungshebel 45 in den zweiten Rahmen 3 der Anspannvorrichtung 1 einzugreifen eingerichtet ist. Betätigt der hydraulische Zylinder 46 den Verriegelungshebel 45, so führt der Verriegelungshebel 45 bezüglich der Hebelachse 47 eine Dreh- bzw. Kippbewegung aus, wodurch er ein hier nicht dargestelltes Eingreifelement des zweiten Rahmens 3 hintergreifen kann. Sind der erste Rahmen 2 und der zweite Rahmen 3 des Anspannsystems 1 in der in Fig. 3 dargestellten gekoppelten Position, in der die Rahmen 2 und 3 formschlüssig ineinandergreifen, so kann durch Betätigen des Verriegelungshebels 45 ein weiterer Formschluss zwischen den Rahmen 2 und 3 hergestellt werden. Durch zusätzliches Verriegeln der Rahmen 2 und 3 mittels der beschriebenen Verriegelungsvorrichtung kann somit im gekoppelten Zustand der Rahmen 2 und 3 ein Formschluss der Rahmen 2 und 3 entlang aller Raumrichtungen hergestellt werden.

Die Fign. 2, 8 und 9 zeigen ferner ein elektrisch steuerbares hydraulisches Ventil 52, das an der der Zugmaschine zugewandten Seite des ersten Rahmens 2 an einem der Schenkel 5 fest montiert ist. Das Ventil 52 kann zur Steuerung des Kurzhubzylinders 23 und des hydraulischen Zylinders 46 jeweils mit diesen verbunden werden.

## Patentansprüche

1. Anspannsystem (1) zum Anspannen eines Arbeitsgeräts (4) an eine Zugmaschine, umfassend einen zugmaschinenseitigen ersten Rahmen (2) und einen geräteseitigen zweiten Rahmen (3), wobei der erste Rahmen (2) und der zweite Rahmen (3) eingerichtet sind, formschlüssig ineinanderzugreifen, und wobei der erste Rahmen (2) eine zu einem unteren Ende des ersten Rahmens (2) hin offene Aussparung (13) aufweist,
**dadurch gekennzeichnet,**
**dass** der erste Rahmen (2) an einer der Aussparung (13) zugewandten Innenseite derart ausgebildet ist, dass ein austauschbares Innenmodul (19) zum Zentrieren und/oder Koppeln einer Gelenkwelle formschlüssig in der Aussparung (13) aufnehmbar ist.

2. Anspannsystem (1) nach Anspruch 1, **dadurch gekennzeichnet, dass** der erste Rahmen (2) an der Innenseite zum Aufnehmen des Innenmoduls (19) wenigstens eine Ausnehmung und/oder wenigstens eine Ausstülpung und/oder wenigstens eine Führungsschiene aufweist und/oder dass der erste Rahmen (2) an der Innenseite wenigstens ein Riegelelement zum Arretieren des Innenmoduls (19) in der Aussparung (13) aufweist, wobei das Riegelelement ein Rastelement und/oder ein mechanisch, elektrisch oder hydraulisch betätigbares Verbindungselement und/oder ein mechanisch, elektrisch oder hydraulisch betätigbares Schließelement umfasst.

3. Anspannsystem (1) nach einem der vorhergehenden Ansprüche, **gekennzeichnet durch** ein austauschbares Innenmodul (19), das formschlüssig in der Aussparung (13) aufnehmbar, das in der Aussparung (13) arretierbar, das aus der Aussparung (13) lösbar und das aus der Aussparung (13) entnehmbar ist, wobei das Innenmodul (19) eine Zentriervorrichtung zum Zentrieren und/oder zum Koppeln einer Gelenkwelle und/oder einer Zapfwellenverbindung aufweist.

4. Anspannsystem (1) nach einem der vorhergehenden Ansprüche, **dadurch gekennzeichnet, dass** der erste Rahmen (2) zwei Schenkel (5) aufweist, die in einer umgekehrten V-Form angeordnet sind und vorzugsweise einen Winkel (10) von 66,6° einschließen.

5. Anspannsystem (1) nach Anspruch 4, **dadurch gekennzeichnet, dass** eine Fläche der Aussparung (13) wenigstens 20 Prozent, vorzugsweise wenigstens 30 Prozent einer von äußeren Eckpunkten (12) der Schenkel (5) aufgespannten Fläche umfasst.

6. Anspannsystem (1) nach einem der Ansprüche 3 bis 5, **dadurch gekennzeichnet, dass** die Zentriervorrichtung ein senkrecht zu einer durch das Innenmodul (19) definierten Innenmodulebene verschiebbares Zentriermodul (20) mit einer Zentrierausnehmung (32) sowie eine Verschiebevorrichtung (21) zum Verschieben des Zentriermoduls (20) aufweist, wobei die Verschiebevorrichtung (21) einen Hebel (22) umfasst, der entlang einer Betätigungsrichtung (41) betätigbar ist, wobei die Betätigungsrichtung (41) parallel oder im Wesentlichen parallel zur Innenmodulebene ist.

7. Anspannsystem (1) nach Anspruch 6, **dadurch gekennzeichnet, dass** die Betätigungsrichtung (41) parallel oder im Wesentlichen parallel zu einer Symmetrieachse (29) des Innenmoduls (19) ist.

8. Anspannsystem (1) nach Anspruch 6 oder 7, **dadurch gekennzeichnet, dass** der Hebel (22) am Zentriermodul (20) oder an einem mit dem Zentriermodul (20) verbundenen, vorzugsweise an einem starr mit dem Zentriermodul (20) verbundenen Element angreift.

9. Anspannsystem (1) nach einem der Ansprüche 6 bis 8, **dadurch gekennzeichnet, dass** das Zentriermodul (20) und die Verschiebevorrichtung (21) auf unterschiedlichen Seiten der Innenmodulebene am Innenmodul (19) angeordnet sind oder angeordnet werden können.

10. Anspannsystem (1) nach einem der Ansprüche 6 bis 9, **dadurch gekennzeichnet, dass** die Verschiebevorrichtung (21) ein hydraulisches und/oder elektrisches und/oder mechanisches Betätigungselement zum Betätigen des Hebels (22) entlang der Betätigungsrichtung (41) aufweist, wobei das Betätigungselement am Innenmodul (19) arretiert ist.

11. Anspannsystem (1) nach einem der Ansprüche 6 bis 10, **dadurch gekennzeichnet, dass** ein erster und ein zweiter Hebelarm des Hebels (22) relativ zueinander starr angeordnet sind und einen Winkel von wenigstens 30 Grad einschließen.

12. Anspannsystem (1) nach einem der Ansprüche 3 bis 11, **dadurch gekennzeichnet, dass** das Innenmodul (19) zum Arretieren des Innenmoduls (19) in der Aussparung (13) wenigstens ein mechanisch und/oder elektrisch und/oder hydraulisch betätigbares weiteres Riegelelement aufweist, wobei das weitere Riegelelement parallel zu einer durch das Innenmodul (19) definierten Innenmodulebene bewegbar ist.

13. Anspannsystem (1) nach einem der vorhergehenden Ansprüche, **gekennzeichnet durch** eine Verriegelungsvorrichtung zum Verriegeln des ersten Rahmens (2) mit dem zweiten Rahmen (3), wobei die Verriegelungsvorrichtung einen am ersten Rahmen (2) angeordneten Verriegelungshebel (45) zum Eingreifen in den zweiten Rahmen (3) oder zum Eingreifen in ein mit dem zweiten Rahmen (3) starr verbundenes Element umfasst, wobei der Verriegelungshebel (45) entlang einer weiteren Betätigungsrichtung betätigbar ist, die parallel oder im Wesentlichen parallel zu einer **durch** den ersten Rahmen (2) definierten Rahmenebene (50) ist.

14. Anspannsystem (1) nach Anspruch 13, **dadurch gekennzeichnet, dass** die Verriegelungsvorrichtung ein hydraulisches und/oder elektrisches und/oder mechanisches weiteres Betätigungselement zum Betätigen des Verriegelungshebels (45) entlang der weiteren Betätigungsrichtung umfasst, wobei die weitere Betätigungsrichtung vorzugsweise parallel oder im Wesentlichen parallel zu einer Symmetrieachse (6) des ersten Rahmens (2) ist.

15. Anspannsystem (1) nach einem der Ansprüche 10 bis 12 oder 14, **gekennzeichnet durch** ein am ersten Rahmen (2) angeordnetes elektrisch steuerbares Hydraulikventil (52) zum Steuern des Betätigungselements und/oder des weiteren Betätigungselements.
